# EUROPEAN PATENT APPLICATION

(11) **EP 1 898 077 A2**
(43) Date of publication of application: **12.03.2008**
(21) Application number: 07015504.9
(22) Date of filing: 07.08.2007
(51) Int. Cl.: F02D 41/24, F02D 41/22, F02D 31/00

(54) **Vehicle characteristics storing apparatus and method**

(30) Priority: 31.08.2006 JP 2006234850
(71) Applicant: Hitachi, Ltd., Chiyoda-ku Tokyo 100-8280 (JP)
(72) Inventor: Yoshida, Yoshiyuki, Tokyo 100-8220 (JP); Matsumura, Tetsuo, Tokyo 100-8220 (JP); Konno, Hitoshi, Tokyo 100-8220 (JP)
(74) Representative: Beetz & Partner

(57) **Abstract**

The invention relates to a vehicle characteristics storing apparatus including a learning correction calculation unit (a1) for learning variations in characteristics and performance caused by aging of an actuator or a device (a10), a correction value rewriting judgment unit (a3) for judging whether a calculated correction value is written in a control memory (98,99) included in the actuator or the device (a10), a correction value rewriting execution judgment unit (a4) for judging rewriting timing when rewriting by the correction value rewriting judgment unit (a3) is carried out, and a correction value rewriting execution unit (a5) for actually writing the learned correction value in the control memory (98,99).

## Description

### BACKGROUND OF THE INVENTION

The present invention relates to an apparatus and method of storing performance characteristics of an actuator and a device for a vehicle and more particularly to a technique of rewriting a learning value and a correction value stored in a memory included in the actuator and device.

Heretofore, the learning control for controlling an idling engine speed to a target engine speed is performed in an engine. Recently, the idling engine speed is controlled by an electronically controllable throttle valve (air amount control valve) and chronological aging and scattering of components thereof are absorbed by the learning control to thereby realize stable control of the idling engine speed. The learning value calculated in the learning control is stored in a control memory of an engine control unit to make updating. Further, a fuel injection valve for controlling a fuel injection amount is also subjected to the learning control of the air fuel ratio to satisfy targets of exhaust and fuel expenses and its learning value is stored in the engine control unit to make updating in the same manner as the learning value of the engine speed. Moreover, a system in which in order to absorb scattering of components (difference in machines) of a fuel injection valve in an early stage, difference in machines of components is previously stored in an engine control unit to thereby improve initial deterioration of exhaust and fuel expenses is also disclosed.

Similarly, a transmission also includes an actuator such as a solenoid for controlling oil pressure in the transmission and there is also another system in which the initial performance of the actuator (solenoid and the like), for example, the solenoid characteristic (characteristic of oil pressure to current) is previously stored in the control unit as an initial correction value, so that reduction in shifting performance due to scattering of components is avoided.

As described above, there is known that variation or deviation of characteristics to scattering (containing difference in manufactured machines) and chronological aging of components of an actuator/device is stored as an initial correction value into the control memory included in the control unit and the learning value calculated by the learning control is stored to make updating so that the system performance is kept. An electrically erasable and rewritable memory (for example, electrically erasable and rewritable programmable read only memory (EEPROM)) is used as the control memory and the initial correction value and the learning value are stored to make updating without replacing the control unit.

Recently, there is also a system in which an actuator/device for a vehicle includes a control memory constituted by EEPROM with reduction in the cost of the control memory and a value corresponding to an initial correction value or its identification information is written into the control memory when the actuator/device is manufactured and shipped. Thereafter, when the actuator/device is connected to a control unit in the vehicle production process, the initial correction value or the identification information stored in the control memory of the actuator/device is read out by the control unit (data transfer from the control memory on the actuator/device side to the control memory on the control unit side), so that a correction value corresponding to the initial correction value or the identification information is selected on the control unit side to be used as basic data for controlling the engine and the transmission.

### SUMMARY OF THE INVENTION

The information stored in the control memory included in the actuator/device is the information for the initial correction corresponding to scattering of components and difference in machines essentially and variation in characteristics and performance by the chronological aging caused by deterioration and wear of the actuator/device after marketed cannot be coped with Accordingly, the variation in characteristics and performance is to be absorbed by learning control, feedback (F/B) control or the like on the control unit side (correction value and learning value are updated and stored in the control memory on the control unit side).

In this connection, when the control unit has some defect and is replaced after marketed, the defective control unit is replaced by a new one or a program is rewritten, although when the correction value and the learning value updated and stored in the control unit are not taken over, it is necessary to retry the learning control or feedback (F/B) control with respect to the chronological aging and it is uneasy to reduce the driving performance remarkably until the control makes progress.

To this end, JP-A-2001-65399 discloses a taking-over method of the learning value and the correction value in which when the control unit is replaced, learning-related data stored in a control memory of an old control unit for vehicle is read out and whether the read-out data is required to be corrected or not is judged, so that the read-out data is corrected in accordance with the judgment result and the corrected data is written into a control memory of a new control unit for vehicle.

However, in the above disclosed method, since an intermediate medium (tool) for reading out the learning-related data from the old control unit and judging whether correction is required or not to make correction is required to be disposed between the new and old units, it is uneasy to increase the cost for preparation of infrastructure. Further, since replacement work performed until the learning-related data is taken over is complicated, it is also uneasy to reduce serviceability.
It is an object of the present invention to provide a characteristics storing apparatus and method of an actuator/device in which rewriting and updating of learning-related data are continuously made between a control memory included in an actuator/device and a control memory included in a control unit and an intermediate medium (tool) for taking over the learning-related data upon replacement of the control unit is not required.
In order to achieve the object, the characteristics storing apparatus of an actuator/device according to the present invention comprises a control unit for controlling an engine and/or a transmission, and the control unit comprises externally stored value reading-in means for reading in information stored in a CU external memory unit constituted by a control memory included in the actuator/device, correction value memory means for storing the read-in value as a correction value, and/or normal control execution means for controlling the actuator/device using the correction value for control of vehicle as basic data for controlling the engine and the transmission.

Preferably, the control unit further comprises learning correction calculation means for learning variation in characteristics and performance by chronological aging of the actuator/device using control parameters including a detection value of a sensor and an estimated value, correction value normality judgment means for judging whether a learning correction value calculated by the calculation means is normal or not, correction value rewriting judgment means for judging whether the correction value calculated by the learning is written into the control memory included in the actuator/device again, correction value rewriting execution judgment means for judging the rewriting timing when rewriting by the correction value rewriting judgment means is carried out, and correction value rewriting execution means for actually writing the correction value calculated by the learning into the CU external memory device constituted by the control memory included in the actuator/device.

The correction value and the learning value showing latest performance characteristics learned by the control unit as variation by chronological aging of the actuator/device are stored in the CU external memory unit included in the actuator/device.

There can be provided the characteristics storing apparatus and method of the actuator/device in which an intermediate medium (tool) for taking over learning-related data upon replacement of a control unit is not required.

The above features can be combined in any way, partly or as a whole.

Other objects, features and advantages of the invention will become apparent from the following description of the embodiments of the invention taken in conjunction with the accompanying drawings.

### BRIEF DESCRIPTION OF THE DRAWINGS

Fig. 1 is a block diagram illustrating an embodiment of a characteristics storing apparatus for storing correction values indicating performance characteristics of an actuator/device according to the present invention;
Fig. 2 is a block diagram schematically illustrating an embodiment of a control apparatus according to the present invention;
Fig. 3 is a block diagram illustrating an example of an electrical control system of the embodiment;
Fig. 4 shows an example of information stored in a memory device included in each actuator/device;
Fig. 5 is a timing chart showing an example of learning values by a control unit and learning and updating of an actuator;
Fig. 6 is a flow chart showing an example of rewriting a learning value in learning of an air amount shown in Fig. 5;
Fig. 7 is a diagram showing judgment of abnormality using a CU learning value;
Fig. 8 is a flow chart showing an example of judgment of device N.G. information;
Fig. 9 is a flow chart showing an example of operation of correction value rewriting judgment means a3;
Fig. 10 is a flow chart showing an example of data rewriting processing; and
Fig. 11 is a flow chart showing an example of operation of externally stored value reading-in means a7.

### DESCRIPTION OF THE EMBODIMENTS

Embodiments of the present invention are now described in detail with reference to the accompanying drawings.

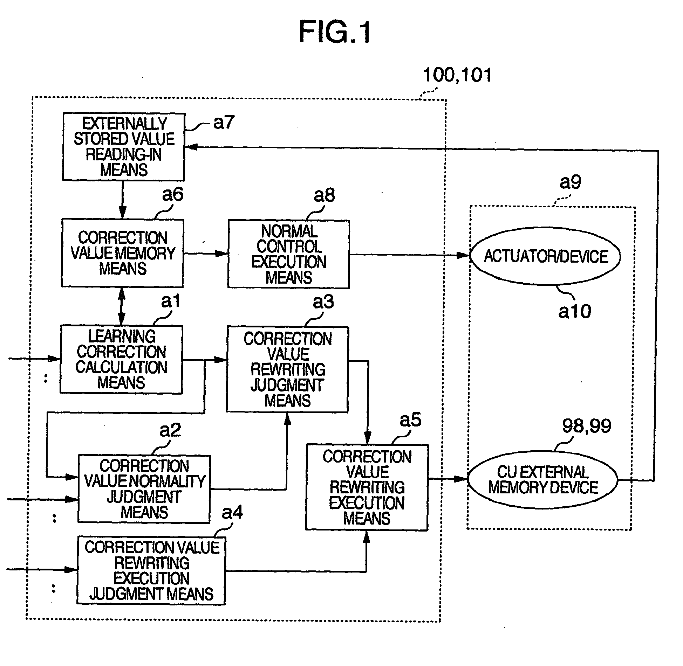

Fig. 1 is a block diagram illustrating an embodiment of a characteristics storing apparatus for storing correction values indicating performance characteristics of an actuator/device according to the present invention. In the embodiment, an actuator/device a10 used for vehicle control includes CU external memory devices 98, 99 constituted by electrically erasable and rewritable control memory such as, for example, EEPROM and is formed as a memory-integrated actuator a9. Correction values for absorbing and correcting scattering of characteristics and difference in machines of components having mechanical and electrical characteristics and constituting the actuator/device are stored in the CU external memory devices 98, 99 in a process of manufacturing or shipping of a product.

Control units 100, 101 for controlling an engine and a transmission include externally stored value reading-in means a7 for reading in information stored in the CU external memory devices 98, 99 included in the memory-integrated actuator a9 to be supplied to the control units, correction value memory means a6 in which correction values necessary to control the actuator/device a10 from among the read-in information are stored and which is constituted by an electrically erasable and rewritable EEPROM, for example, or a backup RAM which can store data temporarily by electrical processing, and normal control execution means a8 for controlling the actuator/device using the correction value as basic data for controlling the engine and the transmission in vehicle control. The correction value memory means a6 has the function capable of storing values taken in externally and does not specify a storing method and a memory medium.

Further, the control units 100, 101 include learning correction calculation means a1 for learning variation in characteristics and performance by chronological aging of the actuator/device as a learning correction value using detection values from a sensor equipped in the vehicle including the engine and the transmission or control parameters calculated on the basis of the detection values, correction value normality judgment means a2 for judging whether the learning correction value calculated by the learning correction calculation means is normal or not, correction value rewriting judgment means a3 for judging whether the correction value calculated by the learning is written or rewritten in the control memory in the CU external memory devices 98, 99 included in the integrated actuator a9 again or not, correction value rewriting execution judgment means a4 for judging the rewriting timing and the execution time when a writing or rewriting request into the control memory by the correction value rewriting judgment means is made, and correction value rewriting execution means a5 for actually writing or rewriting the learning correction value calculated by the learning into the control memory in the CU external memory devices 98, 99 included in the actuator/device. The correction value with respect to performance characteristics of the actuator/device stored in the CU external memory devices 98, 99 included in the integrated actuator a9 before the control units 100, 101 are connected is read out after connection of the units and vehicle control is executed, although the control units 100, 101 are made to advance learning with respect to chronological aging of the actuator/device in parallel and when the calculated learning correction value is appropriate, the learning correction value can be written into the control memory in the CU external memory device 98, 99 included in the actuator/device. In the writing of the learning correction value by the control units, the correction value stored already in the CU external memory devices 98, 99 may be updated (rewritten) by the learning correction value or the learning correction value may be newly stored (written) in an unoccupied memory area. The correction value indicating the latest performance characteristics of the actuator/device at this moment is stored in the CU external memory devices 98, 99 included in the integrated actuator a9 and, for example, even when the control unit is replaced, the new control unit can read in the correction value stored in the CU external memory devices 98, 99 included in the integrated actuator a9 and when the correction value is used to execute the normal control, difference in performance does not occur before and after the replacement of the units. That is, the performance itself of the actuator/device controlled before and after the replacement of the units does not change, so that continuity of driving performance and vehicle performance can be ensured.

The writing timing of the learning correction value to the CU external memory devices 98, 99 included in the integrated actuator a9 is sometimes different from the timing that the learning correction value is calculated and the learning correction value obtained by calculation may be stored in the correction value memory means a6 or the like included in the control units 100, 101. The value read in by the externally stored value reading-in means a7 early as the correction value indicating the basic characteristics of the actuator/device used by the normal control execution means a8 may be replaced by the learning correction value acquired by the learning correction calculation means a1. The correction value used in the control units may be the same as the value stored in the CU external memory devices 98, 99. Synchronization of the learning value calculation timing, the rewriting execution timing and the learning correction value reflection timing to normal control are not specified particularly.

In the embodiment, the value learned by the control units is written in the control memory included in the actuator/device by way of example, although rewriting and writing of data may be made between the control memories included in the actuator/device and the control units provided in the whole vehicle unilaterally or mutually. For example, even when the data is that required by only the actuator, it is considered that the data is stored in external actuator/device and control unit having the control memory in view of the diagnosis function and the security of data.

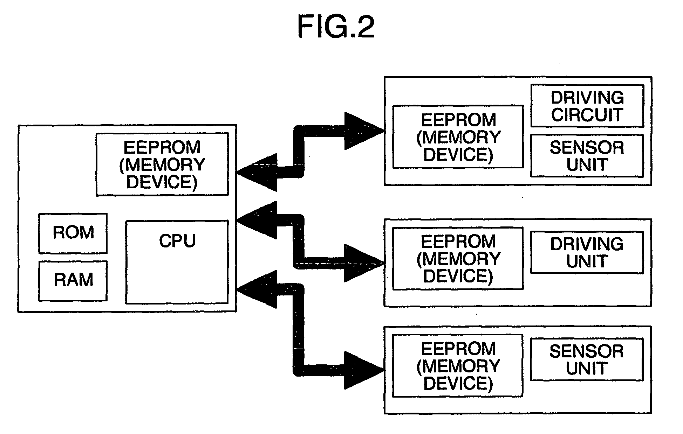

Fig. 2 is a block diagram schematically illustrating an embodiment of a control apparatus according to the present invention.

Fig. 2 shows an example in which actuators/devices for controlling the vehicle are disposed at the periphery of the control units 100, 101 including CPU, ROM and RAM for controlling the engine, the transmission and the like. The actuators/devices are broadly divided into one including a driving circuit and a sensor unit each formed into a module and having both functions thereof, one including only a sensor unit and one including only a driving unit. Each of the actuators/devices and the control unit includes an electrically rewritable and erasable memory device such as, for example, EEPROM. Transfer or transmission and reception of data can be made between the memory devices by means of a method known generally as unilateral or mutual communication in the form of wired communications or wireless communications, for example, so that data can be written in the EEPROM externally and the data stored in the EEPROM can be rewritten and erased externally.

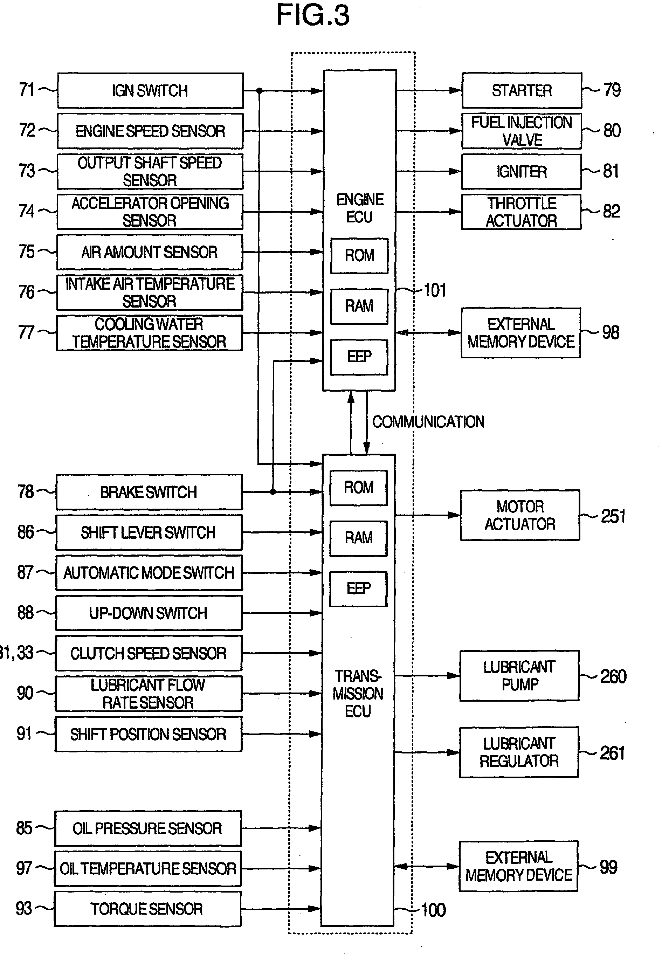

Fig. 3 is a block diagram illustrating an example of an electrical control system of the embodiment. In this example, the control unit includes two electronic control units (ECU) containing an engine control unit (ECU) 101 and a power train control unit (ECU) 100 and necessary information can be transmitted and received between the ECUs through a communication line. Each of the ECUs 100 and 101 includes a microcomputer and the microcomputer can perform signal processing in accordance with a program stored previously in an ROM while utilizing the temporary memory function of a RAM. Further, a rewritable ROM can be used for the memory function and the ROM can be used while rewriting if necessary. Each of the ECUs includes an electrically erasable and rewritable EEPROM, for example.

The engine ECU 101 is connected to an ignition switch 71, an engine speed sensor 72, an output shaft speed sensor 73, an accelerator opening sensor 74, an air amount sensor 75, an intake air temperature sensor 76, a cooling water temperature sensor 77 and a brake switch 78 and is supplied with signals representing an operation position of the ignition switch 71, an engine speed Ne, an output shaft speed No, an accelerator opening APS, an intake air amount Q, an intake air temperature Ta, an engine cooling water temperature Tw and an operation position of the brake switch 78, so that the engine ECU 101 rotates a starter 79 to start the engine, controls a fuel injection amount and an injection timing of a fuel injection valve 80 and an ignition timing of an ignition plug by means of an igniter 81 and takes in a necessary signal from the transmission ECU 100 to thereby drive a throttle actuator 82 to control a throttle valve opening. In this manner, the intake air amount, the fuel amount and the ignition timing can be operated to control the torque of the engine with high accuracy. The fuel injection device contains an intake port injection system in which fuel is injected from an intake port and a cylinder injection system in which fuel is directly injected into a cylinder and it is advantageous to use the engine of the system in which fuel expenses can be reduced and exhaust performance is satisfactory by comparing operation areas (areas decided by the engine torque and the engine speed) required for the engine. A driving force source may use a gasoline engine, a diesel engine, a natural gas engine and an electric motor.

The transmission ECU 100 is connected to the ignition switch 71, a shift lever switch 86, an automatic mode switch 87, an up-down switch 88, a brake switch 78, clutch speed sensors 31, 33, a shift position sensor 91, a lubricant flow rate sensor 90, an oil pressure sensor 85 for detecting oil pressure of the lubricant to be fed, an oil temperature sensor 97 capable of detecting a temperature of the lubricant and a torque sensor 93 capable of directly detecting transmission torque. The transmission ECU 100 controls a motor actuator 251 and the like on the basis of signals supplied from the above elements to realize shift control and launch control. Further, the transmission ECU 100 controls a lubricant pump 260 and a lubricant regulator 261 as the transmission.

External memory devices 98, 99 are provided in each of input devices such as sensors connected to the ECUs and in each of actuators controlled by output signals from the ECUs if necessary. Correction values for absorbing initial characteristics, scattering of components and difference in machines of the actuators/devices and correction values updated to absorb variation in performance characteristics by chronological aging of the actuators/devices by rewriting and writing of data between the external memory devices 98, 99 of the actuators/devices are stored in the external memory devices 98, 99.

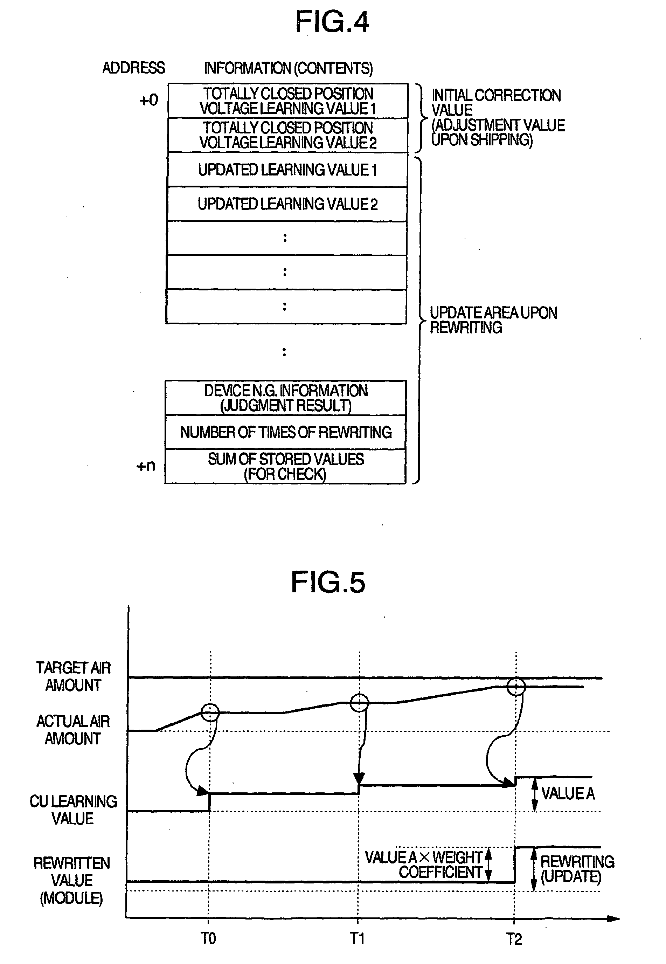

Fig. 4 shows an example of information stored in a memory device included in each actuator/device. As an example, information (contents) of the control memory integrated with an electronic throttle actuator for controlling an intake air amount by means of the engine control unit is shown. The electronic throttle actuator generally adjusts opening of a throttle valve disposed in an intake pipe by a motor to control an intake air amount. In its control method, an actual throttle valve opening is calculated on the basis of a sensor detection voltage of a position meter to make feedback (F/B) control so that the actual throttle opening is equal to a target throttle opening. Since the totally closed position of the actual throttle valve is characteristically different due to difference in machines such as scattering of components or chronological aging, the characteristics of the throttle valve itself are adjusted by an exclusive tool or actual measurement when the actuator is manufactured or shipped and a totally closed position voltage learning value for correcting the totally closed position upon detection of the totally closed position is stored. In other words, it is an initial correction value of the actuator. In this example, totally closed position voltage learning values 1 and 2 are described on the premise that there are two sensor detection systems.

Further, in this example, results of the totally closed position voltage learning values of the throttle valve calculated by the engine control unit connected to the throttle actuator are stored in the control memory included in the throttle actuator as updated learning values 1 and 2. In Fig. 4, the updated learning values by the control unit are written in a different area from that for the initial correction values stored upon shipping, although it does not matter if the initial correction values may be rewritten. The control unit connected to the actuator reads out the updated learning value stored in the actuator as a latest correction value indicating performance characteristics of the actuator at this moment and executes throttle control.

Further, in this example, there is provided a memory area in which device N.G. (no good) information (judgment result) related to abnormality diagnosis result with respect to the throttle actuator by the control unit or another device connected thereto except the updated learning value is written. When the control unit or the like having the initial combination is replaced, the device N.G. information is read out. Consequently, when the throttle actuator is judged to be defective, the fail safe control is performed on the side that the actuator is controlled. The learning value of the throttle actuator used at that time may be stored in another area of the control memory or the learning value may be selected from among the learning value stored upon shipping, the latest updated learning value and the learning value stored in the control unit in this example and be used.

Moreover, in this example, the number of times of writing of the learning value updated in learning control by the control unit into the control memory of the throttle actuator is stored and it can be used to judge limitation of external writing and identity of the actuator. It is also featured that information except the updated learning value is written externally. Further, since transmission and reception of data from the outside are made, the sum of stored values of the control memory for check is also stored in the memory area in order to ensure the reliability of data and is used to judge normality or abnormality upon writing and reading from the outside. These information is an example and it is not prescribed that all information described here is stored.

Fig. 5 is a timing chart showing an example of learning values by a control unit and learning and update of an actuator. In Fig. 5, the idling engine speed is controlled by way of example and an air amount to a target air amount for realizing a target idling speed under predetermined conditions is feedback-controlled by normal control of the engine. Consequently, an actual air amount in Fig. 5 is changed to reach the idling speed and in this example the feedback control is performed in the direction of increasing the air amount. In order to improve convergence upon next control of idling speed with respect to a correction amount (feedback amount) to the actual air amount obtained by the feedback control, if the learning value is updated on the basis of judgment result of predetermined conditions (at time T0 of Fig. 5), its value is stored as a CU learning value in the correction value memory means a6 included in the control unit as shown in Fig. 1. The same learning of the air amount is repeatedly performed in the control unit and if the update conditions of the CU learning value are satisfied each time (at time T1, T2 of Fig. 5), the F/B air amount is stored as the CU learning value. The time T2 of Fig. 5 shows an example in which a writing/rewriting request to the memory device included in the throttle actuator for controlling the air amount is accomplished in addition to the CU learning value update conditions. In this example, the result of multiplying the learning value A by a weight coefficient is written in the memory device on the actuator side as a rewritten value on the basis of the learning value A stored as the CU learning value at that time.

The embodiment is featured in that writing is made to the memory device included in the actuator/device and in this case the processing to the written value, for example, multiplication of the weight coefficient is not specified.

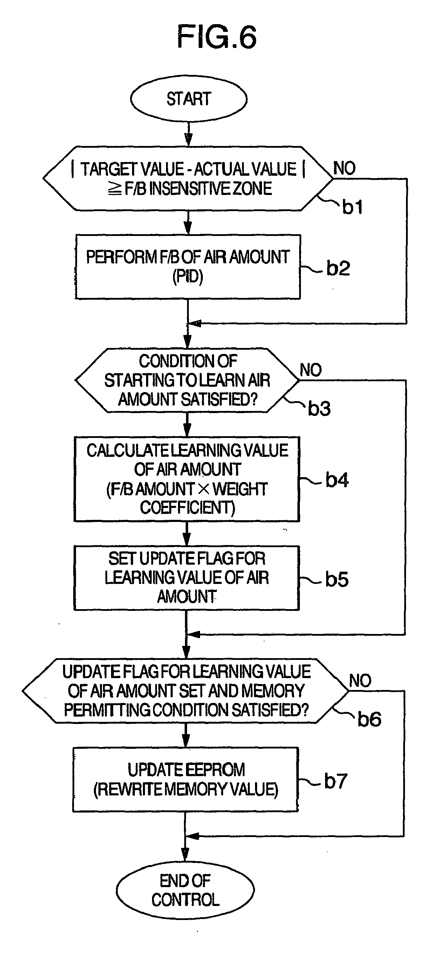

Fig. 6 is a flow chart showing an example of rewriting a learning value in learning of an air amount shown in Fig. 5. Difference between a target air amount for realizing the idling speed by engine control and an actual air amount is judged and whether the feedback control is required or not is judged in processing b1. When the difference exceeds an insensitive zone by feedback, the feedback of the air amount using the PID (proportional plus integral plus derivative action) control is performed in processing b1, so that the idling speed attains the target speed. Then, it is judged whether condition of starting to learn the air amount is satisfied or not in processing b3. Concretely, judgment as to whether the engine water temperature and the engine speed are within predetermined range is made and the state that a factor of external disturbance is small in execution of learning the air amount is judged. The result of multiplying the air amount fed back in the condition satisfying state by the weight coefficient is stored in the control memory corresponding to the correction value memory means a6 of Fig. 1 as the learning value in processing b4. Further, an update flag indicating that the learning value has been updated is set (processing b5). The processing performed so far corresponds to the processing performed by the learning correction calculation means al, the correction value normality judgment means a2 and the correction value rewriting judgment means a3 of Fig. 1. Then, judgment of condition of permitting to update the memory, that is, the judgment corresponding to that performed by the correction value rewriting execution judgment means a4 of Fig. 1 is made in processing b6. When the condition is satisfied, the learning value acquired by learning control in the control unit corresponding to the correction value rewriting execution means a5 is stored in EEPROM included in the throttle actuator of a control target in processing b7. The latest performance characteristics of the actuator can be stored in the control memory of the actuator by this series of processing.

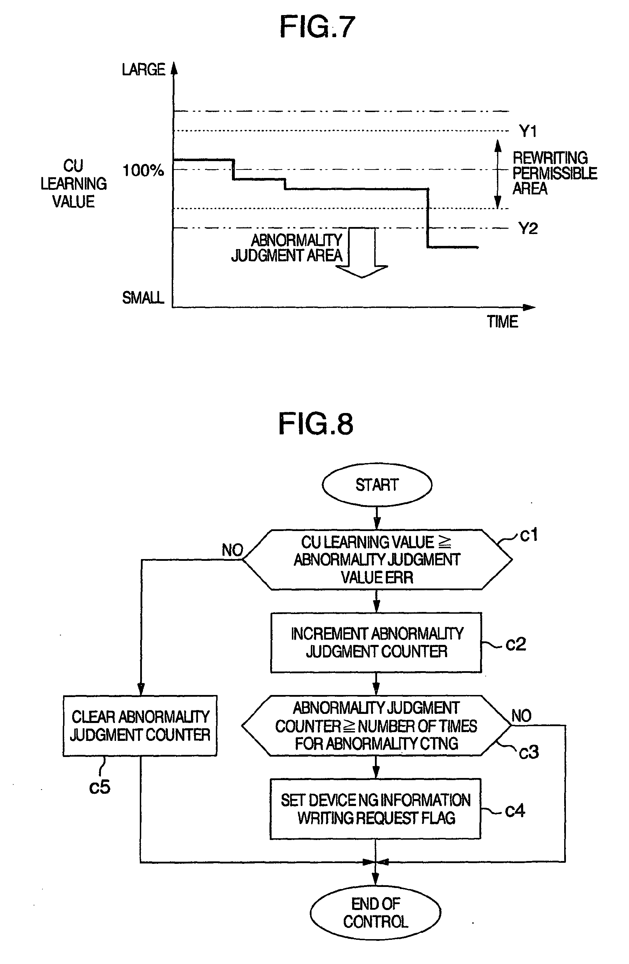

Fig. 7 is a diagram showing judgment of abnormality using a CU learning value. Fig. 7 shows an example in which when learning of the air amount is advanced within a rewriting permissible area shown by Y1 of Fig. 7 by the control unit, the CU learning value is stored in the control memory included in the actuator upon a rewriting execution request, although when the CU learning value is varied to the area (abnormality judgment area) shown by Y2 of Fig. 7, it is judged that the actuator itself has abnormality and the learning value is not rewritten (invalidated). This processing corresponds to processing performed by the correction value normality judgment means a2 of Fig. 1.

Fig. 8 is a flow chart showing an example of judgment of device N.G. information. Device N.G. information is produced in response to variation of the learning value by the control unit as shown in Fig. 7. In processing c1, it is judged that the CU learning value is larger than or equal to an abnormality judgment value ERR corresponding to the area shown by Y2 of Fig. 7 and when it is abnormal, an abnormality judgment counter is incremented in processing c2. The reason of providing the counter is that the learning accuracy by the control unit is considered and variation of the CU learning value is masked when the learning is performed under exceptional operation condition and environment. The necessity of the counter is not prescribed particularly. When the CU learning value is smaller than the abnormality judgment value ERR, the abnormality judgment counter is cleared (processing c5). When the CU learning value continuously exceeds the abnormality judgment value ERR, the abnormality judgment counter is continuously incremented and when a count thereof exceeds the number of times of abnormality judgment CTNG shown in processing c3, it is considered that any abnormality occurs in the actuator to be controlled, so that a device N.G. information writing request flag is set (processing c4). In this flow chart, abnormality of the actuator is judged on the basis of the variation of the learning value by way of example, although the device N.G. information may be produced in combination with other conditions in which abnormality can be detected.

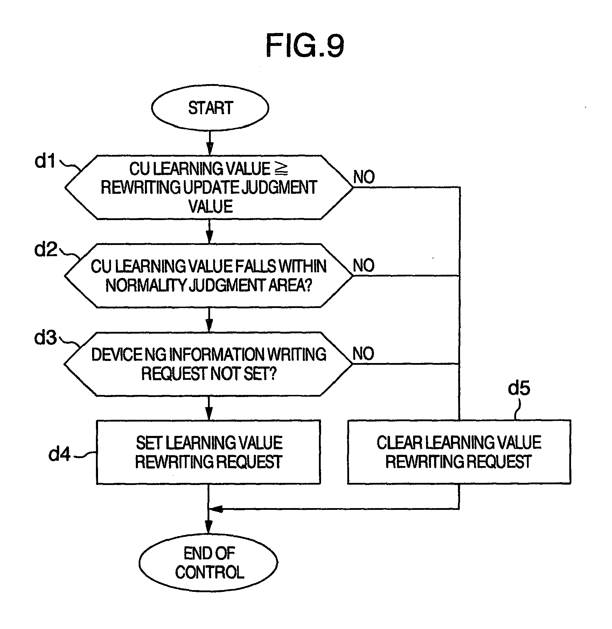

Fig. 9 is a flow chart showing an example of operation of the correction value rewriting judgment means a3 of Fig. 1. Whether a variation amount of the CU learning value learned by the control unit is fit to be rewritten in view of the correction value stored in the control memory included in the actuator or not is judged in processing d1. The reason of this processing is that the rewriting frequency is reduced to lighten a processing load, and the processing is not stipulated. Then, it is judged that the CU learning value falls within the rewriting permissible area shown by Y1 of Fig. 7 in processing d2 and it is judged that the device N.G. information writing request shown in Fig. 8 is not set (during device normality judgment) in processing d3. When all of the processings d1 to d3 are satisfied, a request for writing the CU learning value into the control memory included in the actuator is produced. When any of them is not satisfied, the learning value is not written and updated.

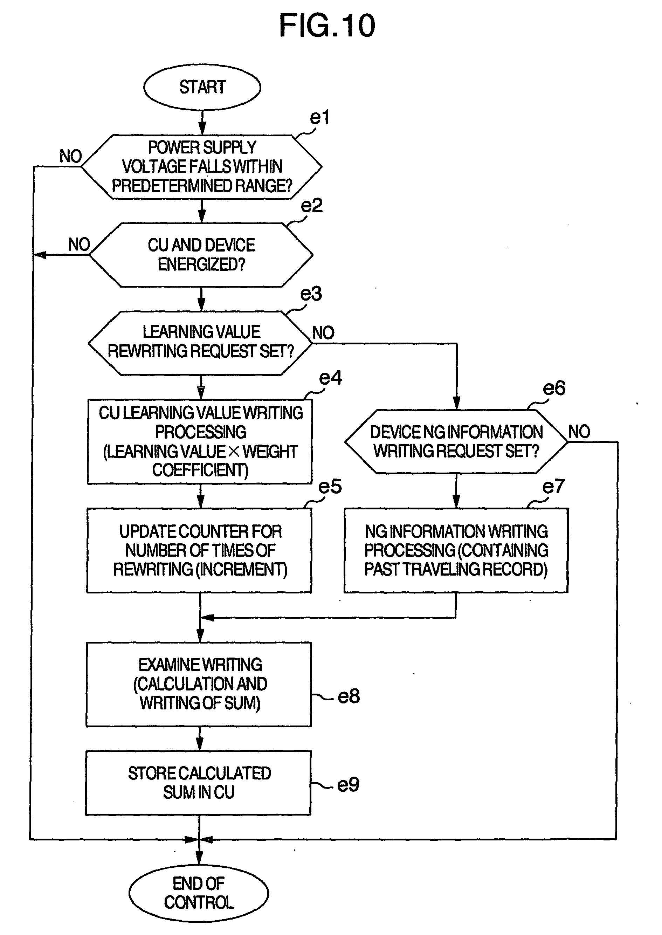

Fig. 10 is a flow chart showing an example of data rewriting processing. The data rewriting processing corresponds to that performed by the correction value rewriting execution judgment means a4 and the correction value rewriting execution means a5. As rewriting execution judgment conditions, it is judged that a power supply voltage falls within a predetermined range to ensure reliability of data transfer by communication in processing e1. Then, it is judged that the control unit and the actuator/device are energized to enable data transfer in processing e2 and whether the learning value rewriting request shown in Fig. 9 is set is judged in processing e3. When the learning value rewriting request is set, CU learning value writing processing is performed in processing e4. Rewriting to the initial correction value shown in Fig. 4 may be made in the writing area or writing may be made in another area as an updated learning value. Further, the incremented value of the counter for the number of times of rewriting in Fig. 4 is stored (processing e5). It is judged that there is no learning value rewriting request and the device N.G. information writing request is set in processing e6 and if there is the request, device N.G. information is written in the data area shown in Fig. 4. At this time, information of past traveling record leading to judgment of N.G. can be stored together. In this example, rewriting of the correction value is judged on the basis of only simple conditions, although turning on and off of the ignition switch, the number of times of updating CU learning value, traveling distance of vehicle, external request input by existing tool and the like may be added as the conditions.

After rewriting of the CU learning value or writing of the device N.G. information is performed, data of stored value in the control memory included in the actuator is read out and examination of writing is made so that the read data are collated with data written by the control unit and the sum of stored values is stored in processing e8. When the writing is normal, the sum of stored values is also stored on the control unit side for examination in case where the control unit reads out data from the control memory of the actuator next time in processing e9 and the processing is ended.

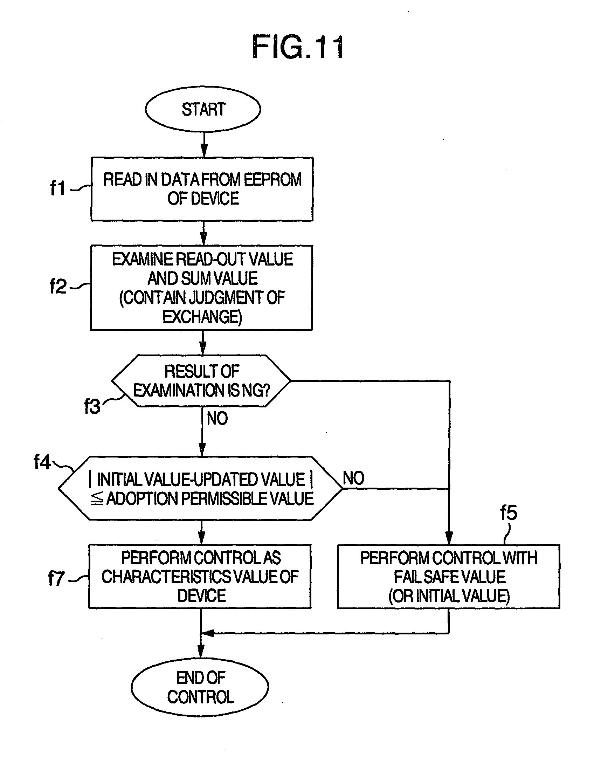

Fig. 11 is a flow chart showing an example of operation of the externally stored value reading-in means a7 of Fig. 1. In processing f1, data is read in from the control memory (EEPROM) included in the actuator/device. Next, the read-out sum value is compared with the sum value stored in the control unit and whether the control unit and the actuator/device from which data is read in are exchanged or not is judged in processing f2. In processings f3, f4, examination result of the sum value is judged and it is judged that the read-out value is a usable value as normal control. For example, difference between the initial correction value and the updated learning value is calculated and when the calculated difference is larger than a predetermined value, it is judged that reliability of data is low, so that normal control at the initial correction value is performed as the fail safe processing as shown in processing f5. When the results in processings f3, f4 are normal, the updated learning value read out from the actuator/device is used in normal control as the latest performance characteristics value (processing f7).

As described above, the correction value for correcting and adjusting the performance characteristics stored in the control memory included in the actuator/device in the initial state in which the control unit and the actuator/device are connected is used as basic control data in the control unit and the learning control for absorbing variation in performance and characteristics by chronological aging of the actuator/device is performed in the control unit to thereby get the latest correction value to the actuator/device, so that the latest correction value is stored in the control memory included in the actuator/device again to rewrite the correction value stored before in the control memory. Accordingly, the actuator/device can always maintain the latest characteristics information. Consequently, it is not necessary to take over the learning value and the correction value when the control unit is replaced and a new unit can read in the contents of the control memory included in the actuator/device without using any intermediate medium (tool) to control the actuator/device using the latest correction value, so that reduction in the performance during progress of the learning, apprehended upon replacement of the unit, can be avoided and continuity of the vehicle performance can be ensured. In addition, information such as abnormality diagnosis result and past use record for the actuator/device except the latest correction value obtained by the learning control can be also written together with the latest correction value when the correction value is rewritten by the control unit, so that execution and judgment of adjustment, repair and replacement of the actuator/device can be made easily.

It should be further understood by those skilled in the art that although the foregoing description has been made on embodiments of the invention, the invention is not limited thereto and various changes and modifications may be made without departing from the spirit of the invention and the scope of the appended claims.

The above features and embodiments can be combined in any way, partly or as a whole.

## Claims

1. A vehicle characteristics storing apparatus including a control memory (98, 99) provided outside a control unit (100, 101) for controlling a vehicle and in which performance characteristics of an actuator and/or device (a10) for controlling the vehicle can be stored, comprising:
a calculation unit (a1) to calculate a learning correction value to variation in performance characteristics of the actuator and/or device (a10) in process of controlling the actuator and/or device in the control unit; and
a writing unit (a5) to write the learning correction value into the control memory provided outside the control unit.

2. A vehicle characteristics storing apparatus according to Claim 1, wherein
the control memory (98, 99) provided outside the control unit (100, 101) is integrated with the actuator or device.

3. A vehicle characteristics storing apparatus according to Claim 1 or 2, wherein
an initial correction value and/or an initial adjustment value for correcting scattering of components and/or difference in machines upon shipping of the actuator and/or device (a10) is stored in the control memory (98, 99).

4. A vehicle characteristics storing apparatus according to Claim 3, wherein
the initial correction value and/or initial adjustment value for correcting scattering of components and/or difference in machines upon shipping of the actuator and/or device is rewritten by the learning correction value calculated in the control unit.

5. A vehicle characteristics storing apparatus according to at least one of Claims 1 to 4, wherein
the learning correction value calculated in the control unit is written into control memory area while keeping the initial correction value or initial adjustment value for correcting scattering of components and/or difference in machines upon shipping of the actuator and/or device.

6. A vehicle characteristics storing apparatus according to at least one of Claims 1 to 5, wherein
the control memory (98, 99) is an electrically erasable and rewritable memory medium.

7. A vehicle characteristics storing apparatus according to at least one of Claims 1 to 6, wherein
the learning correction value and/or abnormality judgment result is automatically written into the control memory during normal online operation.

8. A vehicle characteristics storing apparatus including a control memory (98, 99) provided outside a control unit (100, 101) for controlling a vehicle and in which performance characteristics of an actuator and/or device (a10) for controlling the vehicle can be stored, comprising:
an abnormality judgment unit to judge abnormality to variation in performance characteristics of the actuator and/or device in process of controlling the actuator and/or device in the control unit; and
a writing unit to write judgment result into the control memory provided outside a control unit.

9. A vehicle characteristics storing apparatus according to Claim 8, wherein
the control memory provided outside the control unit is integrated with the actuator or device.

10. A vehicle characteristics storing apparatus according to Claim 8 or 9, wherein
an initial correction value and/or an initial adjustment value for correcting scattering of components and/or difference in machines upon shipping of the actuator and/or device is stored in the control memory.

11. A vehicle characteristics storing apparatus according to Claim 10, wherein
the initial correction value and/or initial adjustment value for correcting scattering of components and/or difference in machines upon shipping of the actuator and/or device is rewritten by the learning correction value calculated in the control unit.

12. A vehicle characteristics storing apparatus according to Claim 10 or 11, wherein
the learning correction value calculated in the control unit is written into control memory area while keeping the initial correction value or initial adjustment value for correcting scattering of components and/or difference in machines upon shipping of the actuator and/or device.

13. A vehicle characteristics storing apparatus according to at least one of Claims 10 to 12, wherein
the control memory is an electrically erasable and rewritable memory medium.

14. A vehicle characteristics storing apparatus according to at least one of Claims 10 to 13, wherein
the learning correction value and/or abnormality judgment result is automatically written into the control memory during normal online operation.

15. A vehicle characteristics storing apparatus including a control memory provided outside a control unit for controlling a vehicle and in which performance characteristics of an actuator and/or device for controlling the vehicle can be stored, wherein
the control memory stores latest performance characteristics data to be used at this moment by means for controlling the actuator and/or device.

16. A vehicle characteristics storing apparatus including a control memory provided outside a control unit for controlling a vehicle and in which performance characteristics of an actuator and/or device for controlling the vehicle can be stored, wherein
when a correction value read out from the control memory into the control unit is not within a predetermined range or when abnormality judgment result is written into the control memory, the control unit gives a warning to a driver by turning on a warning lamp or performs fail safe processing using an initial correction value stored in the control memory or a learning correction value stored in the control unit.

17. A vehicle characteristics storing method including a control memory (98, 99) provided outside a control unit (100, 101) for controlling a vehicle and in which performance characteristics of an actuator and/or device (a10) for controlling the vehicle can be stored, comprising:
calculating a learning correction value to variation in performance characteristics of the actuator and/or device in process of controlling the actuator and/or device in the control unit; and
writing the learning correction value into the control memory provided outside a control unit.

18. A vehicle characteristics storing method including a control memory (98, 99) provided outside a control unit (100, 101) for controlling a vehicle and in which performance characteristics of an actuator and/or device (a10) for controlling the vehicle can be stored, comprising:
judging abnormality to variation in performance characteristics of the actuator and/or device in process of controlling the actuator and/or device in the control unit; and
writing judgment result into the control memory provided outside a control unit.

19. A vehicle characteristics storing method including a control memory (98, 99) provided outside a control unit (100, 101) for controlling a vehicle and in which performance characteristics of an actuator and/or device (a10) for controlling the vehicle can be stored, wherein
the control memory stores latest performance characteristics data to be used at this moment by means for controlling the actuator and/or device.

20. A vehicle characteristics storing method including a control memory (98, 99) provided outside a control unit for controlling a vehicle and in which performance characteristics of an actuator and/or device (a10) for controlling the vehicle can be stored, wherein
when a correction value read out from the control memory into the control unit is not within a predetermined range or when abnormality judgment result is written into the control memory, the control unit gives a warning to a driver by turning on a warning lamp or performs fail safe processing using an initial correction value stored in the control memory or a learning correction value stored in the control unit.
